# EUROPÄISCHE PATENTSCHRIFT

(11) **EP 1 119 960 B1**
(45) Veröffentlichungstag und Bekanntmachung des Hinweises auf die Patenterteilung: **26.03.2003**
(21) Anmeldenummer: 99944487.0
(22) Anmeldetag: 23.08.1999
(51) Int. Cl.: H04N 1/32, G07D 7/00, G07D 7/20

(54) **Benutzung eines digitalen Wasserzeichens zum Nachweis des Urhebers eines elektronischen Dokumentes**
Using a digital watermark for proof of authorship of an electronic document
Utilisation d'un filigrane numérique pour prouver la paternité d'un document électronique

(30) Priorität: 09.10.1998 DE 19847943
(43) Veröffentlichungstag der Anmeldung: 01.08.2001
(73) Patentinhaber: Deutsche Telekom AG, 53113 Bonn (DE)
(72) Erfinder: SCHWENK, Jörg, D-91239 Henfenfeld (DE); TÖNSING, Friedrich, D-64739 Höchst (DE)
(86) Internationale Anmeldenummer: EP9906187
(87) Internationale Veröffentlichungsnummer: WO00022810

(56) Entgegenhaltungen:
- EP-A- 0 845 758
- DE-A- 19 615 301
- US-A- 5 499 294
- US-A- 5 809 160
- SCHNEIDER M ET AL: "ROBUST CONTENT BASED DIGITAL SIGNATURE FOR IMAGE AUTHENTICATION" PROCEEDINGS OF THE INTERNATIONAL CONFERENCE ON IMAGE PROCESSING (ICIP),US,NEW YORK, IEEE, Seite 227-230 XP002090178 ISBN: 0-7803-3259-8

## Beschreibung

Die Erfindung bezieht sich auf ein Verfahren der im Oberbegriff des Patentanspruchs 1 näher bezeichneten Art, das im Postscript, JPEG, MPEG-1 beschrieben ist.

Dokumente, die in elektronischer Form vorliegen, sind ohne Qualitätsverlust beliebig oft kopierbar. Es müssen daher möglichst zuverlässige Verfahren eingesetzt werden, die eine unkontrollierte Verteilung solcher Dokumente verhindern, um die Rechte des geistigen Eigentümers zu schützen.

Durch das schnelle Wachstum des Internets und die dadurch entstandene Möglichkeit, Dokumente digital zu verbreiten, entsteht ein steigender Bedarf zum Schutz vor illegaler Verbreitung von Dokumenten und damit zum Schutz eines Copyrightinhabers vor Raubkopien.

Zu diesem Zweck arbeiten große Firmen, wie IBM, NEC und Microsoft, aber auch kleinere Firmen, wie Digimarc (siehe Funkschau 17/97; S. 21) und Forschungsinstitute, wie die Fraunhofergesellschaft IGD und die GMD Darmstadt daran, sogenannte digitale Wasserzeichen in Dokumente einzubetten. Bei Verfahren auf dieser Grundlage wird eine Information, die den Copyrightinhaber identifiziert, unsichtbar in die zu schützenden Dokumente eingebracht. Das Wasserzeichen wird im Dokument so versteckt, daß kein Außenstehender es entdecken kann. Nur der Eigentümer selbst kann mit Hilfe seines geheimen Schlüssels das Wasserzeichen sichtbar machen und so, z. B. im Falle eines Rechtsstreits, beweisen, daß er tatsächlich der Eigentümer ist.

Die Art des eingebrachten digitalen Wasserzeichens kann unterschiedlich sein und hängt dabei vom jeweiligen Typ des Dokuments ab (z. B. Postscript, JPEG, MPEG-1).

So ist z. B. von Schneider, M. et al. im Aufsatz: "ROBUST CONTENT BASED DIGITAL SIGNATURE FOR IMAGE AUTHENTICATION" in Proc. Intl. Conference on Image Processing (ICIP) New York, US, IEEE, 1996, S. 227-230 ein Verfahren zur versteckten Einbettung digitaler Signaturen in die Nutzdaten zum Nachweis der Authentizität von Daten, bzw. deren Manipulation beschrieben, bei dem Signaturen von Nutzdaten mittels Hash- Funktion extrahiert werden und das Ergebnis mit einem privaten Schlüssel kombiniert wird, so daß insgesamt eine Signatur entsteht, die sowohl Charakteristika des Originalwerkes als auch die Identität des Autors beinhaltet.

Eine solche Signatur kann, gemäß dieser Veröffentlichung, parallel zu den Daten des Originalwerkes übermittelt oder auch darin so versteckt werden, daß sie als Wasserzeichen dient. Auch kann danach zusätzlich das digitale Wasserzeichen mit einem authentischen Zeitstempel versehen werden.

Auch die US- A- 5 499 294 beschreibt die Erzeugung einer einem Originalbild zugeordneten digitalen Signatur, die sowohl einen Hash- Wert als auch einen privaten Schlüssel umfaßt. Diese Signatur wird jedoch nicht in einem Wasserzeichen verwendet.

Die US- A- 5 809 160 zeigt ein Verfahren zum Einbetten von Signaturinformationen in Originaldaten als Wasserzeichen, ohne jedoch eine Hash - Funktion zu erwähnen.

Weiterhin offenbaren die Zusammenfassungen von DE 19 615 301 A1 und EP 0 845 758 A3 das Einbetten einer digitalen Signatur in authentifizierbar zu machende Daten, wobei jeweils ein Schlüssel bzw. geheimer Schlüssel mit einem Extrakt der Daten zu einer einzubettenden Signatur kombiniert wird.

Digitale Wasserzeichen erlauben es dem Copyrightinhaber, sein geistiges Eigentum an einem illegal verteilten Dokument nachzuweisen. Digitale Wasserzeichen erlauben es jedoch nicht, den Verursacher der illegalen Verteilung zu ermitteln und ihm die illegale Verteilung nachzuweisen, weil es, im Gegensatz zum elektronischen Fingerabdruck, keine Hinweise auf einen berechtigten Empfänger einer Kopie des Dokuments enthält. Ein solcher Empfänger, der bei einer Weiterverteilung selbst als Urheber auftreten will, kann das Dokument ebenfalls mit seinem digitalen Wasserzeichen versehen. Das kann zu der paradoxen Situation führen, daß im Falle eines Rechtsstreits beide Kontrahenten ihr Wasserzeichen im strittigen Dokument nachweisen können und sich gegenseitig der unerlaubten Kopie beschuldigen.

Das Gericht kann in einem solchen Fall nur dann eine korrekte Entscheidung fällen, wenn der wahre Urheber noch ein Dokument ohne beide Wasserzeichen oder nur mit seinem Wasserzeichen, ohne das des Kontrahenten, nachweisen kann. Das kann jedoch, besonders bei sehr umfangreichen Dokumenten, die nur in einer mit digitalem Wasserzeichen versehenen Kopie auf einem öffentlich zugänglichen Server liegen, nicht möglich sein.

Die Aufgabe der Erfindung ist es, dem wahren Urheber, auch in solch schwierigen Fällen, den Nachweis seines geistigen Eigentums unstrittig zu ermöglichen.

Mit dem im Kennzeichen des Patentanspruchs 1 angegebenen Verfahren wird das ermöglicht, weil das Verfahren reversibel ist und damit das digitale Wasserzeichen, zwecks Überprüfung der Identität des Eigentümers, vom Dokument wieder getrennt werden kann.

Mit dem Kennzeichen des Patentanspruchs 2 wird dieses Verfahren noch sicherer für den Nachweis von Angriffen Dritter gestaltet und mit dem Kennzeichen des Anspruchs 3 wird die Verfahrensweise der Überprüfung bei mehreren Wasserzeichen erklärt.

Aus der Literatur sind sowohl Beispiele für reversible als auch für nicht reversible Wasserzeichenverfahren bekannt. Unter den klassisch bekannten Verfahren sei auf "I.J.Cox, J. Kilian, T. Leighton und T. Samoon: Secure spread spectrum watermarking for images, audio and video in: IEEE Int. Conf. Image Processing, vol. 3 pp. 243-246, 1996 als anwendbares Verfahren verwiesen. Bei diesem Verfahren wird ein Wasserzeichen in ein Bild eingebettet, indem eine Folge von Zahlen zu bestimmten Koeffizienten in der DCT-Darstellung des Bildes hinzu addiert wird. Diese Zahlen können auch wieder subtrahiert werden.

Anhand des nachfolgenden Ausführungsbeispiels wird die Erfindung näher erklärt:

Entsprechend den erwähnten bekannten Verfahren ist das Wasserzeichen nicht allein von der Identität id des Eigentümers, sondern zusätzlich vom Dokument m abhängig. Dazu wird ein Hashwert h(m) des Dokuments m erzeugt und das Wasserzeichen (id, h(m)) im Dokument nach dem Grundgedanken so versteckt, daß nach Entfernung des Wasserzeichens das Dokument m in seinem ursprünglichen Zustand wieder hergestellt werden kann.

Würde nun ein Angreifer die gleiche Strategie, wie oben zitiert, verfolgen, so würde folgendes passieren:
- Der wahre Urheber A legt das Dokument m' auf einem Server ab, das man erhält, wenn man in m das Wasserzeichen (a,h (m)) einfügt.
- Ein Angreifer B manipuliert dieses Dokument zu m'', indem er in m' zusätzlich das Wasserzeichen (b,h(m')) einfügt.
- Das Gericht kann nun ein Verfahren dadurch entscheiden, indem es die beiden Kontrahenten auffordert, ihre Wasserzeichen (a) offenzulegen und dann (b) aus dem Dokument zu entfernen. Dann kann das Gericht aus dem wasserzeichenfreien Dokument m den Hashwert h(m) berechnen und überprüfen, in welchem der beiden Wasserzeichen dieser Wert enthalten ist.
- Alternativ bzw. zusätzlich könnte das Gericht auch beide Kontrahenten dazu auffordern, jeweils ihr Wasserzeichen zu entfernen, und dann aus den beiden verschiedenen Dokumenten m' und m* die Hashwerte berechnen und prüfen, in welchem Wasserzeichen diese Hashwerte enthalten sind.

Die erwähnte Weiterbildung des Verfahrens beruht darauf, daß in das Wasserzeichen ein authentischer Zeitstempel mit eingeht. Ein solcher authentischer Zeitstempel ist dabei ein Zeitwert t zusammen mit Zusatzinformation x, der von einer unabhängigen Institution mit einer digitalen Unterschrift, etwa in der Form sig(t,x), versehen wurde.

Das in das Dokument einzubringende Wasserzeichen besteht in diesem Fall aus einem authentischen Zeitstempel, bei dem die Zusatzinformation mindestens den Hashwert h(m) des Dokuments m enthält, und der Identität des Eigentümers, z. B. in den Formen: (a,sig(t,h(m))) oder sig(t,(a,h(m))).

## Patentansprüche

1. Verfahren zum Verwenden von digitalen Wasserzeichen für elektronische Dokumente, bei dem vom Eigentümer eines Dokuments als Identitätsnachweis id im Dokument ein digitales Wasserzeichen versteckt wird, das vor dem Verstecken neben dem Identitätsnachweis id mindestens mit dem Hashwert h(m) des Dokuments versehen wurde und mit einem geheimen Schlüssel zum Sichtbarmachen des Wasserzeichens versehen wird,
**dadurch gekennzeichnet, daß**,
zum Nachweis der wahren Urheberschaft, das Wasserzeichen reversibel eingebettetet wird und mit Hilfe des geheimen Schlüsses wieder entfernt wird, um den Originalzustand des Dokuments wieder herzustellen bzw. anhand von dessen Hashwert zu prüfen.

2. Verfahren nach Anspruch 1, **dadurch gekennzeichnet, daß** das digitale Wasserzeichen vor dem Verstecken neben dem Identitätsnachweis id mit einem authentischen Zeitstempel versehen wird, der neben dem Zeitwert t mindestens auch den Hashwert h(m) des Dokuments enthält.

3. Verfahren nach Anspruch 1, **dadurch gekennzeichnet, daß** zum Überprüfen der Eigentümerschaft eines elektronischen Dokuments, in das mehrere verschiedene Wasserzeichen entsprechend Anspruch 1 eingebettet wurden, alle eingebetteten Wasserzeichen entfernt werden, und anschließend der Hashwert des so entstandenen Dokuments gebildet wird, der mit den in den einzelnen Hashwerten in den verschiedenen Wasserzeichen verglichen wird, um den ursprünglichen Eigentümer zu bestimmen.

## Claims

1. Process for the use of digital watermarks for electronic documents in which a digital watermark is hidden in a document as proof of identity id by the owner of the document, wherein, before being hidden, the watermark has been provided, in addition to the proof of identity id, at least with the hash value h (m) of the document and is provided with a secret key for visualization of the watermark,
**characterized in that** for proof of genuine authorship, the watermark is reversibly embedded and is removed using the secret key in order to restore the original condition of the document or in order to check the document on the basis of its hash value.

2. Process according to claim 1, **characterized in that**, before being hidden, the digital watermark is provided, in addition to the proof of identity id, with an authentic time stamp containing, in addition to the time value t, at least also the hash value h (m) of the document.

3. Process according to claim 1, **characterized in that**, in order to check the ownership of an electronic document into which a plurality of different watermarks have been embedded according to claim 1, all the embedded watermarks are removed and, subsequently, the hash value of the thus created document is formed, said hash value being compared with the individual hash values in the different watermarks in order to determine the original owner.

## Revendications

1. Procédé d'utilisation de filigranes numériques pour documents électroniques, où le propriétaire du document dissimule dans le document, comme preuve d'identité id, un filigrane numérique, qui, avant sa dissimulation, est pourvu, outre de la preuve d'identité id, au moins du *hash code* h(m) du document et d'un code secret permettant de visualiser le filigrane,
**caractérisé en ce que**, pour preuve de l'origine réelle, le filigrane est inséré de manière réversible et à nouveau retiré à l'aide du code secret, afin de rétablir l'état original du document ou de le vérifier à partir de son *hash code.*

2. Procédé selon la revendication 1, **caractérisé en ce que** le filigrane est pourvu, avant sa dissimulation, outre de la preuve d'identité id, d'un cachet à date authentique, qui comprend, à côté de la date t, au moins le *hash code* h(m) du document.

3. Procédé selon la revendication 1, **caractérisé en ce que**, pour vérifier qui est le propriétaire d'un document électronique dans lequel plusieurs filigranes différents conformes à la revendication 1 ont été insérés, tous les filigranes insérés sont retirés, le *hash code* du document ainsi obtenu étant constitué pour le comparer aux différents *hash codes* des divers filigranes, afin de déterminer le propriétaire d'origine.
